# EUROPÄISCHE PATENTSCHRIFT

(11) **EP 1 177 667 B1**
(45) Veröffentlichungstag und Bekanntmachung des Hinweises auf die Patenterteilung: **20.04.2005**
(21) Anmeldenummer: 00935012.5
(22) Anmeldetag: 12.05.2000
(51) Int. Cl.: H04L 29/00

(54) **NETZWERK, INTERPRETER FÜR EIN DERARTIGES NETZWERK UND VERFAHREN ZUM BETREIBEN EINES NETZWERKES**
NETWORK, INTERPRETER FOR SUCH A NETWORK, AND METHOD FOR OPERATING A NETWORK
RESEAU, INTERPRETEUR POUR UN RESEAU DE CE TYPE ET PROCEDE D'EXPLOITATION D'UN RESEAU

(30) Priorität: 12.05.1999 DE 19922118
(43) Veröffentlichungstag der Anmeldung: 06.02.2002
(73) Patentinhaber: Océ Printing Systems GmbH, 85586 Poing (DE)
(72) Erfinder: HOFSTETTER, Andreas, D-82024 Taufkirchen (DE)
(74) Vertreter: Schaumburg, Thoenes, Thurn, Landskron
(86) Internationale Anmeldenummer: PCT/EP2000/004312
(87) Internationale Veröffentlichungsnummer: WO 2000/070837

(56) Entgegenhaltungen:
- EP-A- 0 872 792
- EP-A- 0 874 306
- EP-A- 0 889 418
- WO-A-96/29663
- WO-A-99/18534

## Beschreibung

Die Erfindung betrifft ein Netzwerk, einen Interpreter für ein derartiges Netzwerk und ein Verfahren zum Betreiben eines Netzwerkes. Insbesondere betrifft die Erfindung ein Netzwerk für ein Drucksystem.

An den bestehenden Datennetzen, wie z.B. LANs (Local Area Networks) und WANs (Wide Area Networks) sind in der Regel mehrere Drucker und Drucksysteme und eventuell entsprechende Vor- und Nachbearbeitungsgeräte, die z.B. das bedruckte Papier auf ein spezielles Format zurechtschneiden oder binden, angeschlossen. Die einzelnen Drucker und Drucksysteme unterscheiden sich in ihrer Leistungsfähigkeit stark, so können z.B. kleine Tintenstrahldrucker mit einer Druckleistung von 4 Seiten pro Minute oder Hochleistungsdrucker mit einer Druckleistung von 40 Seiten oder mehr pro Minute an das Datennetz angeschlossen sein. Die Drucker und Drucksysteme unterscheiden sich nicht nur in ihrer Druckleistung, sondern auch in der Druckqualität. So gibt es z.B. Drucker die nur in einer einzigen Farbe (monochrom) drukken, wohingegen auch zunehmend Farbdrucker zum Einsatz kommen. Elektrophotographische Hochleistungsdruckgeräte sind heutzutage ohne weiteres in der Lage, in zwei Farben zu drucken, das heißt, in einem sogenannten Spot-Color-Betrieb oder Highlight-Color-Betrieb. Ein derartiger Drucker ist beispielsweise von der Océ Printing Systems GmbH unter der Bezeichnung PAGESTREAM® 200DSC bekannt.

Die unterschiedlichen Drucker und Drucksysteme sind in der Regel auch mit unterschiedlichen Systemschnittstellen an das jeweilige Netzwerk gekoppelt, wie z.B. dem SNMP (Simple Network Management Protokoll) oder dem DMI (Desktop Management Interface). Obwohl oftmals über das Netzwerk zu mehreren Druckern bzw. Drucksystemen eine physikalische Verbindung besteht, kann nur ein Teil der Drucker angesprochen werden.

Mit der rasanten Entwicklung der Intra- und Internets, mit welchen mehrere LANs und WANs zu einem einzigen Netz verbunden sind, insbesondere durch die Einführung des auf dem HTTP-Protokoll (Hypertext Transport Protokoll) basierenden WWW-Dienstes, steigt die Anzahl der Drucker und Drucksysteme, die von einem einzigen Benutzer grundsätzlich angesprochen werden können explosionsartig an, wobei auch die Vielfalt der Protokolle zum Ansprechen der Drucker und Drucksysteme entsprechend zunimmt.

Dieser Erfolg des Internet und der Intranets wurde stark durch die Einführung des World Wide Web (WWW) gefördert, das von Internet-Benutzern einfach bedient werden kann und erlaubt, Informationen unterschiedlichster Art und von unterschiedlichsten Orten der gesamten Welt abzurufen. Der WWW-Dienst des Internets beruht auf dem Client-Server-Prinzip. Die Kommunikation erfolgt zwischen einem Web-Server, der auch als WWW-Server bezeichnet wird und der Informationen bereitstellt, und einem Client, der die Informationen anzeigt. Die Informationen sind auf dem Web-Server in Seiten gespeichert, wobei die Daten in den Seiten z. B. im sogenannten HTML-Format (Hypertext Markup Language) abgespeichert sind. Es sind auch andere Formate gebräuchlich, wie z. B. XML. Diese Formate sind Derivate des grundlegenden SGML-Formates (Standard General Markup Language). Diese Formate werden als Markup-Sprachen bezeichnet, da mit ihnen die Aufmachung beschrieben und festgelegt werden kann.

Ein entsprechendes Dokument besteht aus normalem Text, bei dem Steueranweisungen, sogenannte "Tags" in den Text eingefügt sind. Diese Tags beeinflussen unter anderem das Layout, das später im Betrachtungsprogramm, dem Browser, am Client angezeigt wird. So gibt es z.B. Tags um Überschriften zu erzeugen, oder Tags, die das Schriftbild verändern können. Die Tags werden immer in "< ...>" eingeschlossen.

Die Übertragung der Informationen vom Web-Server zum Client erfolgt gemäß dem HTTP-Protokoll, wobei die an den Client übertragene Information vom dort installierten Browser gelesen und die einzelnen Tags interpretiert werden, so daß die Information in der vorbestimmten Art und Weise am Bildschirm des Client dargestellt werden.

Da mit dem HTML-Format im wesentlichen nur statische Bilder und Texte dargestellt werden können, ist der WWW-Dienst zur Einbindung von Multimedia-Elementen, Animationen oder Programmen durch JAVA ergänzt worden. JAVA ist eine von SUN Microsystems entwickelte, objektorientierte Programmiersprache für Web-Anwendungen. JAVA unterstützt Text-, Hypertext-, Grafik-, Audio- und Animationsfunktionen.

Die in JAVA programmierten Programmpakete können entweder als sogenannte JAVA Applets vom Web-Server auf den Client geladen werden oder am Client als sogenannte JAVA-Applikationen vorinstalliert sein. Die JAVA-Applets sind am Server separat von den dazugehörigen HTML-Seiten gespeichert. Eine Abwandlung von JA-VA, die als JAVAscript bezeichnet wird, erlaubt das Einfügen von Programmpaketen in der HTML-Seite.

Um über das Internet Drucker und Drucksysteme ansteuern zu können, hat man JAVA-Applikationen entwickelt, mit welchen man sowohl Verwaltungsfunktionen an den Druckern und Drucksystemen als auch das Absenden von Druckaufträgen an die einzelnen Drukker bzw. Drucksysteme ausführen kann. Diese JAVA-Programme stellen einen wesentlichen Fortschritt gegenüber dem bisherigen Zustand dar, da es dem Benutzer eines Client-Rechners ermöglicht, über das Internet mehrere Drucker und Drucksysteme plattformunabhängig anzusteuern. Die Art der Drucksysteme, das heißt, die Schnittstellentypen, die von einem Client angesteuert werden können, sind durch die jeweilige JAVA-Applikation festgelegt, wobei für jeden Schnittstellentyp ein separates Programmelement vorgesehen ist. Dies bedeutet, daß je mehr unterschiedliche Schnittstellen mit einer solchen JAVA-Applikation angesteuert werden sollen, desto umfangreicher muß diese JAVA-Applikation sein. Entsprechendes gilt für den Funktionsumfang, der bei einer solchen JAVA-Applikation angesteuert werden soll. Dies hat zur Folge, daß diese JAVA-Applikationen umfangreiche Programme mit z.B. einen Datenumfang von 9 MB sind. Sie beanspruchen somit am Client erhebliche Rechenleistung und Speicherplatz und sind deshalb nur für Anwender zweckmäßig, die regelmäßig unterschiedliche Drucker und Drucksysteme ansteuern wollen.

Es ist auch bekannt, am Server ausführbare Programme vorzusehen, die vom Client aufgerufen werden können. Diese Programme sind entweder als vollständig compilierte Programme oder als von einem Interpreter interpretierbarer Programmcode am Server hinterlegt. Für einen derartigen interpretierbaren Programmcode wird für Internetanwendungen häufig die Programmiersprache Perl verwendet. Sie ist insbesondere für am Server auszuführende Datenbankanwendungen geeignet. Mit Perl können jedoch auch vom Server zum Client ladbare Seiten erzeugt werden, wobei Perl Befehle vorsieht, mit welchen die Aufmachung entsprechender Seiten aufgebaut werden kann. Hierbei kann auch vom Perl-Programmcode ein HTML-Programmcode generiert werden. Beim Aufruf eines derartigen Programmes am Server wird der vollständige Programmcode am Server interpretiert und ausgeführt. Auf Perl basierende Programme zum Ansteuern von Druckern, Drucksystemen und entsprechenden Vor- und Nachbearbeitungsgeräten sind dem Erfinder der vorliegenden Erfindung nicht bekannt.

In den Veröffentlichungen Jörn Heid, "Kettenreaktion" in iX 11/1998, Seiten 166-171, von Jörn Heid, "Was es sein darf", in iX 11/1998, Seiten 64-67 oder von Rainer Klute, "Mehr als Applets" in: iX 11/1998, Seiten 60-63 werden Servlets beschrieben, die auf einem Server abgespeicherte Java-Programme sind. Die Servlets können in HTML-Seiten eingebunden werden und werden beim Aufruf dieser Seiten am Server ausgeführt. Mit derartigen Servlets können z.B. Teile oder vollständige HTML-Seiten erzeugt werden. Servlets stellen somit eine Möglichkeit dar, am Server ausführbare Java-Programme in HTML-Seiten einzubinden.

Aus der Veröffentlichnung von Jörn Heid, "Hand angelegt" In: iX 11/1998, Seiten 68-70 gehen sogenannte Java Server Pages (JSP) hervor, bei welchen Script- und HTML-Code im selben Dokument enthalten sein kann, wobei vor dem Verschicken an den Client die Scripts durch deren Ergebnis ersetzt werden. Mit dieser Technik ist es somit möglich, am Server Dateien vorzusehen, die vom Client aufgerufen werden und sowohl am Client als auch am Server ausführbare Sprachelemente umfassen. Ähnliche Techniken sind unter dem Markennamen Live Wire und Active Server Pages bekannt.

Die Veröffentlichung von B. Merkleund F. Pilhofer, "Perlen vor die Middleware" in: iX 4/1999, Seiten 154-165 betrifft das COR-BA-Mapping für Scriptsprachen. CORBA (Common Object Request Broker Architecture) ist eine aufwendige Architektur für einen Anfrage- und Vermittlungsdienst. Mit CORBA können alle möglichen Objekte innerhalb eines Netzwerkes vermittelt werden. Deshalb ist es auch möglich, auf Peripheriegeräten vorgesehene Objekte mittels CORBA zu vermitteln. Hierzu ist es jedoch notwendig, daß diese Objekte ein CORBA-spezifisches Protokoll zu Kommunikation beherrschen. Ferner weist CORBA ein API (Application Program Interface) auf, mit dem individuell gefertigte Programme am Server mit dem CORBA-System kommunizieren können. Diese individuellen Programme können selbstverständlich auch zur Kommunikation von Peripheriegeräten vorgesehen werden. Weiterhin ist es möglich, CORBA-unabhängige Protokolle auf das CORBA-Protokoll zu mappen. Hierdurch ist grundsätzlich auch eine Kommunikation zu anderen Protokollen möglich. Das Erstellen eines derartigen Mapping bzw. von eigenständigen Programmen ist aufwendig. Das Erzeugen von CORBA-Objekten an Peripheriegeräten ist auch aufwendig, da das von CORBA vorgegebene Protokoll zur Kommunikation von Objekten eingehalten werden muß, das durch seine allgemeine Anwendbarkeit sehr umfangreich und kompliziert ist.

Aus der DE 197 04 694 A1 ist ein Verfahren und eine Vorrichtung zum Steuern eines Peripheriegerätes über das Internet bekannt, das an sich bekannte CGI-Scripts verwendet, welche am Server unabhängig von eine HTML-Seite abgelegte Programme sind, die jedoch mit einer entsprechenden Referenz aus HTML-Seiten aufgerufen und am Server ausgeführt werden können.

Aus dem Druckerbuch der Oce Printing Systems GmbH, ISBN 3-00-001019-X, Ausgabe 3d, Oktober 1998 geht auf den Seiten 12-2 bis 12-8 ein Print-Server für professionelle, Internet-unabhängige Anwendungen hervor. Dieser Print-Server wird als PRISMApro® bezeichnet. Ein solcher Print-Server besteht aus einem leistungsfähigen Personalcomputer, mit einer entsprechenden Software, um einen oder mehrere Drucker, insbesondere einen Schnell- oder Hochleistungsdrucker ansteuern zu können. Ein solcher Print-Server ist in ein Netzwerk eingebunden und setzt die einkommenden Datenströme in entsprechende Druckdaten um. Je nach Ausführungsform kann der Print-Server Daten in den Formaten AFDPS, Line/SF, PostScript, TIFF, PDF, LCDS, Line/O und PCL verarbeiten. Derartige Print-Server werden insbesondere bei Datenbankanwendungen eingesetzt, wobei aus einer Datenbank eine große Datenmenge mit variablen Daten gedruckt wird.

Ferner ist im Druckerbuch der Océ Printing Systems GmbH, ISBN 3-00-001019-X Ausgabe 3d, Oktober 1998 auf den Seiten 14-2 bis 14-12 das Druck-Produktionskontrollsystem Océ Domain® beschrieben. Bei diesem System werden ein oder mehrere Drucker mit Vorund Nachverarbeitungsgeräten mittels eines Netzwerkes verbunden. Das System steuert und überwacht die Druckproduktion. Es ist eine netzwerkbasierende Client-Server-Lösung mit einer Datenbank, die auf einem zentralen Datenbankserver installiert ist. Alle im Produktionsprozeß erfaßten Maschinen- und Betriebsdaten werden in dieser Datenbank gesammelt und für spätere Auswertungen den verschiedenen Clients bereitgestellt oder können in kundenspezifische Anwendungen exportiert werden. Mit Océ Domain® werden Schnittstellen zu dem im Netzwerk angeschlossenen Hochleistungsdruckern und den verschiedenen Hard- und Softwarekomponenten realisiert. Es werden die Industriestandards DMI (Desktop Management Interface), LMO (Large Mailroom Operations) und ODBC (Open Data Base Connectivity) unterstützt. Océ Domain® ist ein Hochleistungssteuer- und Kontrollsystem, das insbesondere bei Druckzentren zur Anwendung kommt, bei welchen Hochleistungsdrucker mit Geräten zur Vorverarbeitung und zur Nachverarbeitung gekoppelt sind.

Aus der WO 99/18534 geht ein Verfahren hervor, mit welchen in einem Computernetzwerk Anfragen von unterschiedlichen Servern bearbeitet werden können, wobei die Bearbeitung der Anfragen automatisch zwischen den Servern aufgeteilt wird. Hierzu weisen die einzelnen Server ein sogenanntes Belastungsausgleichsmodul auf, mit welchen die jeweilige Arbeitsbelastung der über das Netzwerk verbundenen Server ermittelt wird und demjenigen Server die Anfrage zugeordnet wird, der die geringste Arbeitsbelastung aufweist. Dieses Verfahren ist insbesondere zur Verwendung im Internet vorgesehen.

Die EP 0 874 306 A2 beschreibt ein Netzwerkdrucksystem, an das mehrere Clients angeschlossen sein können, die an unterschiedlichen Druckern mittels im Netzwerk vorgesehenen Druckserver Druckaufträge ausführen können. Die Druckserver sind mit einer Schichtarchitektur ausgebildet, und weisen ein Kommunikationsinterface auf. Dieses Kommunikationsinterface kann mit bekannten Programmpaketen versehen sein, die automatisch das Druckformat des Druckauftrages in ein für den Drucker geeignetes Druckformat übersetzen.

Aus der EP 0 872 792 A2 geht ein Netzwerk zur Kommunikation mit Drucksystemen hervor, das auf dem Internet beruht. Hier sind insbesondere Funktionen vorgesehen, um HTML-Dateien, die einen Verweis (Referenz) auf eine weitere Bilddatei beinhalten, korrekt ausdrucken zu können. Hierzu ist an der Ausgabevorrichtung, die am Netzwerk angeschlossen ist, ein Interpreter vorgesehen, der die HTML-Datei ausführt und die entsprechenden Bilddateien in die HTML-Dateien einfügen kann. Mit diesen Interpretern werden Bilddateien beschreibende Sprachen wie zum Beispiel JPIG und GF interpretiert. Andererseits ist es auch möglich, dass anstelle des Interpreters im Netzwerk ein Übersetzungsprogramm zum Übersetzen der Bilddateien ein unmittelbar ausführbaren Programmcode vorgesehen sein kann.

Die WO 86/29663 beschreibt HTML-Dateien, in welche ausführbare Skripts eingebunden sind. Ein solches Skript wird am Webserver ausgeführt und ist beispielsweise in einer Interpretersprache, wie Basic oder Tool Controlling Language oder in einer Compilersprache wie zum Beispiel "C" programmiert und in ein . entsprechend lauffähiges Programm compiliert. Hierin ist auch beschrieben, wie an einem Client derartige HTML-Dateien erstellt und an einem Server abgelegt werden können.

Der Erfindung liegt die Aufgabe zugrunde, eine einfache technische Lösung zur Ansteuerung unterschiedlicher Drucker und Drucksysteme zu finden.

Die Aufgabe wird durch ein Netzwerk mit den Merkmalen des Anspruchs 1, einen Interpreter für ein derartiges Netzwerk mit den Merkmalen des Anspruchs 9 und durch ein Verfahren zum Betreiben eines Netzwerkes mit den Merkmalen des Anspruchs 16 gelöst. Vorteilhafte Ausgestaltungen der Erfindung sind in den Unteransprüchen angegeben.

Das Netzwerk gemäß der Erfindung ist ein Netzwerk zum Zusammenschluß von Rechnern, das zumindest einen Client mit zumindest einem Server verbindet, wobei am Server gespeicherte Dateien vom Client durch Mitteilen einer Dateiadresse abgerufen werden können, wodurch eine entsprechende Datei an den Server übertragen wird. Diese vom Server an den Client übertragbaren Dateien enthalten Sprachelemente, die am Client ausgeführt werden. Am Server ist ein Interpreter vorgesehen, der weitere, am Server ausführbare Sprachelemente, die in den am Server gespeicherten und vom Client abrufbaren Dateien enthalten sind, interpretieren und ausführen kann.

Mit der Erfindung werden somit am Server Dateien vorgesehen, die sowohl am Server ausführbare Sprachelemente als auch am Client ausführbare Sprachelemente enthalten. Hierdurch werden wesentliche Vorteile erzielt, da es nicht mehr notwendig ist, wie es z. B. von am Server ausführbaren Perl-Programmen bekannt ist, am Client ausführbare Sprachelemente durch Sprachelemente einer anderen Sprache zu generieren, was mit erheblichem Programmieraufwand verbunden ist.

Erfindungsgemäß wird ein Gateway in einen Interpreter eines Servers integriert, wobei Sprachelemente zum Aufrufen des Gateways vorgesehen sind.

Hierdurch wird am Server eine Computersprache bereitgestellt, mit welcher unmittelbar Gateways aufgerufen werden können. Die Integration der Gateways in die Programmiersprache erlaubt die unmittelbare Ansteuerung aus der Programmiersprache von beliebigen Peripheriegeräten. Hierdurch kann ein Benutzer, der eine am Server abzuspeichernde Datei erstellt, mit dem Erstellen dieser Datei gleichzeitig die Steuerung der Peripheriegeräte behandeln. Dies ist bei herkömmlichen Systemen nicht möglich, da die entsprechenden Schnittstellen entweder nur durch von Spezialisten erstellbaren Programmen als CGI-Scipt, Servlet oder dergleichen am Server hinterlegt werden können, oder an ein bekanntes Brokersystem aufwendig gemappt werden müssen.

Im Vergleich zu dem oben beschriebenen CORBA-System läßt sich die Erfindung wesentlich einfacher und mit wesentlich weniger Programmcode im Server realisieren, und bietet dem Benutzer wesentlich mehr Möglichkeiten in der Festlegung seiner Anwendungen, da sie als Programmiersprache frei programmierbar ist.

Ein erfindungsgemäßes Netzwerk erlaubt somit jedem Nutzer, der über einfache Hilfsmittel zur Erstellung derartiger am Server gespeicherter Dateien verfügt, auch Peripheriegeräte, die unmittelbar oder über das Netz mit dem Server in Verbindung sind, anzusteuern. Insbesondere können einfach Drucker angesteuert werden.

Entsprechen die am Client ausführbaren Sprachelemente einer Markup-language (wie z. B. SGML, HTML, XML) können die Dateien mit den meisten gebräuchlichen Editoren und Textverarbeitungsprogrammen editiert werden. Zur Erstellung einfacher Markup-Dateien sind oftmals keine Kenntnisse über die Markup-Sprache notwendig, da die entsprechende Syntax automatisch vom Editor bzw. vom Textverarbeitungsprogramm eingefügt wird. Mit der Erfindung können somit komplexe Anwendungen mit einfach zu gebrauchenden Textverarbeitungsprogrammen erstellt werden. Er muß lediglich in die ihm geläufigen vom Server aufrufbaren Dateien die am Server ausführbaren Sprachelemente hinzufügen. Die Kombination von am Client ausführbaren als auch am Server ausführbaren Sprachelementen in einer Datei stellt somit eine wesentliche Erleichterung für den Benutzer dar, der die Dateien am Server einrichtet, da er mit seinen ihm vertrauten Mitteln diese Dateien erstellen kann und die am Client ausführbaren Befehle nicht in einer anderen Computersprache codieren muß, bei deren Ausführung sie künstlich erzeugt werden.

Durch das Vorsehen eines Interpreters, der die vom Client abgerufenen Dateien auf darin enthaltene Sprachelemente untersucht und gegebenenfalls diese Sprachelemente am Server interpretiert und ausführt, kann durch die Übertragung lediglich einer einzigen Adresse vom Client zum Server die Ausführung eines an sich beliebigen Programmes am Server initiiert werden. Es wird somit eine Möglichkeit geschaffen, mit minimalem Programmieraufwand am Client, und minimalstem Datenvolumen, das zwischen dem Server und dem Client übertragen werden muß, beliebige, am Server vorab in entsprechenden Dateien hinterlegte Programme, aufrufen zu können.

Diese Programme können von mehreren Clients benutzt werden, so daß lediglich an einer einzigen Stelle im Netzwerk, am Server, ein entsprechendes Programmpaket hinterlegt werden muß.

Die mit der Erfindung erzielten Vorteile werden besonders deutlich, wenn die Datenübertragung im Netzwerk auf einer standardisierten Datenübertragung basiert, wie z.B. der gemäß dem HTTP-Protokoll, das bei den Intra- und Internets angewandt wird. Bei Verwendung eines derartigen Standards wird am Client lediglich ein herkömmlicher Browser ohne weitere zusätzliche Programme benötigt, um die entsprechenden Funktionen anzusteuern. Bisher wurden zum Ansteuern derartiger Funktionen, wie es eingangs erläutert worden ist, aufwendige Programme z. B. in JAVA auf den Clients geladen, wodurch lediglich an den Clients die gewünschten Funktionen angesteuert werden können, auf welche die entsprechenden Programme installiert oder geladen worden sind. Bei dem erfindungsgemäßen Netzwerk können hingegen von jedem Client, an dem ein Browser vorgesehen ist, die entsprechenden Programme am Server aufgerufen werden, ohne daß zusätzliche Programme auf den Client geladen werden müssen. Man benötigt lediglich eine Zugangsberechtigung zu dem jeweiligen Server.

Ein wesentlicher funktioneller Vorteil der Erfindung gegenüber den herkömmlichen Systemen liegt darin, daß es gemäß der Erfindung möglich ist, daß in den am Server abgespeicherten Dateien Programmelemente enthalten sind, die den Client automatisch zu einem weiteren Server vermitteln. Diese Vermittlung erfolgt z.B. einfach durch Übertragen der Adresse des weiteren Servers vom ursprünglichen Server zum Client, die dann am Client ausgeführt wird, das heißt zu weiteren Server geschickt wird, wodurch eine Verbindung zwischen dem weiteren Server und dem Client aufgebaut wird.

Diese Vermittlungsfunktion kann auch als automatische Vermittlungsfunktion ausgestaltet sein, wobei am Server eine Datei angelegt ist, die die Dienste anderer Server beinhaltet, so daß, wenn von einem Client ein bestimmter Dienst an diesem einen Server abgefragt wird, und dieser Server den Dienst nicht erfüllen kann, den Client automatisch zu einem weiteren Server vermittelt, der den Dienst erledigen kann. Für den Client stellt sich diese Funktion so dar, als ob sein Auftrag zwischen den Servern ausgehandelt wird, um denjenigen Server festzustellen, der ihn erfüllen kann. Man bezeichnet diese Funktion der automatischen Weitervermittlung deshalb auch als "Trading".

Das Trading umfaßt auch die Möglichkeit, daß der Server als eine Art Durchgangs- bzw. Relaisstation fungiert, wobei er eine Verbindung zwischen dem Client und einer weiteren Arbeitsstation wie z.B. einem weiteren Server einer Druckstation oder dergleichen schaltet, bei der der Server zwischen der Arbeitsstation und dem Client geschaltet ist und die Daten entsprechend weiterleitet. Da der Server mit einem Gateway versehen ist, kann zwischen der weiteren Arbeitsstation und dem Server und dem Server und dem Client die Datenübertragung auf einem unterschiedlichen System bzw. unterschiedlichen Protokoll beruhen, wobei die Daten vom Server entsprechend übersetzt werden, damit eine reibungslose Datenübertragung möglich ist.

Ein Drucksystem mit einem solchen Client-Server-Netzwerk erlaubt bei der Hinterlegung entsprechender Dateien am Server jedem Client, der auf diesen Server zugreifen kann, die mittels des Servers ansteuerbaren Druckeinrichtungen und Vor- und Nachbearbeitungseinrichtungen anzusprechen, ohne daß hierfür am Client ein spezielle Software installiert sein muß. Die einzelnen Druckaufträge können auch von einem Server an einen anderen Server weitervermittelt werden, um z.B. auf einem für diesen speziellen Druckauftrag besonders geeigneten Drucker ausgedruckt zu werden. Man kann den Server mit Gateways zum Umsetzen der Daten in spezielle Druckprotokolle oder auch andere Arten von Übertragungsprotokollen versehen, so daß mittels eines einzigen Servers auf unterschiedlichste Art und Weise an das Netzwerk angekoppelte Drucker angesteuert werden können.

Eine aus mindestens einem Drucker, mit evtl. einem Vor- und Nachbearbeitungsgerät bestehende Druckstation kann einfach an ein Netzwerk angekoppelt werden, indem die Geräte der Druckstation (Drucker, Vor- und Nachbearbeitungsgeräte) mit einem Server verbunden werden, der mit dem erfindungsgemäßen Interpreter versehen ist, und an dem entsprechende Programme zur Ansteuerung der einzelnen Geräte der Druckstation in Dateien abgespeichert sind, die vom Client abgerufen werden können. Die Geräte einer solchen Druckstation können dann über das Netzwerk von jedem beliebigen Client angesteuert werden, sofern eine entsprechende Zugangsberechtigung zum Server vorliegt. Die Erfindung schafft somit eine Möglichkeit, mit der man lediglich durch Hinzufügen eines Servers an eine bestehende Druckstation einen Netzzugang zur Druckstation erstellt, der mit äußerst einfachen technischen Mitteln angesprochen werden kann.

Das erfindungsgemäße Netzwerk ist zur Ansteuerung von Druckern und entsprechenden Vor- und Nachbearbeitungsgeräten ausgebildet. Es kann jedoch auch zur Ansteuerung beliebiger anderer Geräte verwendet werden, da das Grundprinzip der vorliegenden Erfindung, das Vorsehen eines Interpreters an einem Netz-Server, der vom Client aufgerufene Dateien interpretiert, auf weitere, beliebige Netzwerkanwendungen übertragen werden kann.

Nachfolgend wird die Erfindung beispielhaft anhand der beigefügten Zeichnungen näher erläutert. In denen zeigen:
- Fig. 1: schematisch ein erfindungsgemäßes Netzwerk in einem Blockschaltbild,
- Fig. 2: eine Schnittstellenabfrage in einem Flußdiagramm, das den Programmablauf des der als Anhang beigefügten Computerprogramms zeigt, und
- Fig. 3: ein Tradingverfahren im Flußdiagramm.

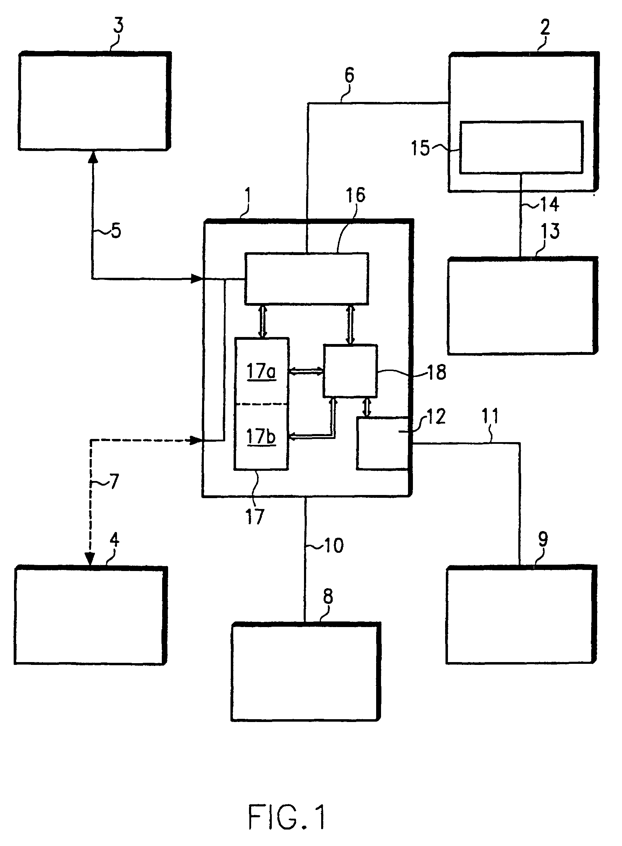

Fig. 1 zeigt ein Ausführungsbeispiel eines erfindungsgemäßen Netzwerkes. Das Netzwerk weist einen ersten Web-Server 1 einen zweiten Web-Server 2 und einen ersten und zweiten Client 3, 4 auf. Der erste und zweite Web-Server und der erste Client sind mittels eines LANs über Datenleitungen 5, 6 miteinander verbunden, wobei die Datenleitung 5 den ersten Web-Server mit dem ersten Client und die Datenleitung 6 den ersten Web-Server 1 mit dem zweiten Web-Server 2 verbindet. Auf dem LAN wird ein Intranet betrieben.

Zwischen dem ersten Web-Server 1 und dem zweiten Client 4 besteht keine feste physikalische Datenverbindung. Bei Bedarf wird z.B. über das Telefonnetz eine entsprechende Datenverbindung 7 aufgebaut wird, wobei das Internet als Übertragungsmedium verwendet wird.

Der erste Client 3 ist z.B. ein über das Intranet mit dem ersten Web-Server 1 verbundener Bürocomputer eines Anwenders des erfindungsgemäßen Netzwerkes, wohingegen der Client 2 ein zu Hause beim Anwender stehender Personalcomputer ist, mit dem sich der Anwender mittels eines Modems im Internet einwählen kann und eine Verbindung zum ersten Web-Server 1 herstellen kann. Da die Datenverbindung 7 nicht permanent vorliegt, ist sie in Fig. 1 gestrichelt eingezeichnet.

An beiden Clients 3, 4 ist jeweils ein Browser installiert, so daß die beiden Clients 3, 4 mit dem Web-Server 1 mit dem vom Internet bekannten Diensten kommunizieren können. Diese Dienste sind z.B. Telnet, das eine Terminal-Simulation ermöglicht, oder FTP, mit dem Dateien übertragen werden können. Bei dem vorliegenden Ausführungsbeispiel wird der Dienst des World Wide Web (WWW) verwendet, der bei Bedarf automatisch auf die weiteren Dienste, wie z.B. FTP, News, Telnet, Gopher, E-mail, usw. des Internets zurückgreift. An dem ersten Web-Server 1 sind zwei Geräte 8, 9 angeschlossen, wobei das Gerät 8 mittels einer seriellen Leitung (RS 232/V24) mit dem Web-Server 1 verbunden ist und zwischen dem Gerät 9 und dem Server 1 eine Verbindung 11 nach dem SNMP-Protokoll (Simple Network Management Protokoll) installiert ist. Das SNMP-Protokoll wird insbesondere zum Ansteuern von an einem Netzwerk angeschlossenen Geräten verwendet. Am Web-Server 1 ist ein Gateway 12 vorgesehen, das die über die SNMP-Verbindung 11 einkommenden Daten vom SNMP-Protokoll in das vom Web-Server 1 auf den Datenverbindungen 5 bis 7 angewandte Internet-Protokoll umsetzt bzw. in umgekehrter Richtung die Daten gemäß dem Internet-Protokollen auf das SNMP-Protokoll umsetzt, wenn sie vom Web-Server 1 zum Steuergerät 9 übertragen werden. Ein Gateway im Sinne der Erfindung sind alle Hard- und Softwarekomponenten am Web-Server, die eine Verbindung zu einem sich vom Internet unterscheidenden Kommunikationssystem bzw. Netzwerkes herstellen. Am Web-Server 1 können mehrere weitere Gateways zu anderen Kommunikationssystemen vorgesehen sein, die z.B. auf dem DMI-Standard (Desktop Management Interface), dem LP-Standard (Line Printer), SLP (Service Location Protocol), dem IPP-Standard (Internet Printing Protokoll) beruhen. Es sind Gateways zum PJMweb möglich. PJMweb ist eine web-basierender Druckclient, der von Océ entwickelt worden ist. Ein Gateway kann auch eine Terminal-Emulation erzeugen. Insbesondere können Gateways vorgesehen werden, die zur Ansteuerung spezieller Druckerkommunikationssysteme ausgebildet sind.

Da über die Gateways eine Verbindung zu unterschiedlichen Netzwerken hergestellt werden kann, können an einen mit einem Gateway versehenen Server grundsätzlich beliebig viele Geräte angeschlossen bzw. vom Server angesteuert werden.

Der zweite Web-Server 2 ist mit einem weiteren Gerät 13 über eine Leitung 14 verbunden. Hierzu ist am zweiten Server 2 ein speziell für das Gerät 13 ausgebildetes Kommunikationsprogramm 15 installiert. Dieses Kommunikationsprogramm 15 ist ein compiliertes Programm für ein sogenanntes Web-Based-Management. Derartige Programme sind jeweils für eine spezielle Anwendung ausgerichtet, wie z.B. der Ansteuerung des Gerätes 13, wodurch mit diesem Programm lediglich eine einzelne Verbindung zu dem Gerät 13 hergestellt und lediglich ein bestimmter Gerätetyp angesteuert werden kann.

Der erste und zweite Web-Server 1, 2 weisen neben anderen Dienstprogrammen ein WWW-Dienstprogramm 16 auf, das die aus dem Stand der Technik bekannten Funktionen aufweist, das heißt, daß es bei Empfang eines URL aus einem Datenspeicher 17 des Webservers 1, 2 die entsprechenden Seiten ausliest und an den Client 3, 4 schickt, der die URL abgeschickt hat. Erfindungsgemäß ist am Server 1, 2 ein Interpreter 18 vorgesehen, mit welchem die im Speicher 17 abgelegten Seiten vor dem Versenden zu einem Client 3, 4 interpretiert werden, das heißt, daß in den Seiten enthaltene Sprachelemente vom Interpreter 18 ausgeführt werden. Die einzelnen Seiten sind im HTML-Format abgespeichert, das heißt, daß sie standardisierte Sprachelemente aufweisen, die vom Browser des Clients 3, 4 ausgeführt werden können. Die vom Interpreter 18 ausführbaren Sprachelemente sind unabhängig von dem vom Browser ausführbaren Sprachelementen. Sie können auch als Ergänzung zum HTML-Format betrachtet werden, weshalb das Format der abgespeicherten Seiten auch als erweitertes HTML-Format bezeichnet werden kann.

Im Anhang ist ein Programmcode eines Programmbeispieles angegeben, das unten näher erläutert wird. Zunächst wird der Befehlsumfang des Interpreters kurz erläutert. Der Interpreter umfaßt, wie die meisten Computersprachen, Befehle zur Stringverarbeitung, Systembefehle und Strukturbefehle. Der Interpreter kann je nach Bedarf mit weiteren Gruppen von Befehlen versehen werden. Zusätzlich zu den vorgenannten Gruppen von Befehlen weist der Interpreter einen Befehl auf, mit welchem neue Befehle des Interpreters erzeugt werden können. Dieser Befehl ist "addfunction", mit dem ein beliebiger Befehl (Funktion) aus beliebigen auf dem Server zur Verfügung stehenden Befehlen (Maschinensprache, Betriebssysteme oder sonstige Hochsprache) aufgebaut werden kann. "addfunction" wird nicht in den HTML-Seiten verwendet, sondern kann vom Benutzer in einer Programmentwicklungsumgebung aufgerufen werden.

Wichtige Stringverarbeitungsbefehle sind "userDefineString", "userGetCGIString", "userPreReplaceString", "userPostReplaceString" und "userCompose". Mit "userDefineString" können Stringvariablen definiert werden. Mit "userGetCGIString" kann ein am Client eingegebener String eingelesen werden. Die Befehle "userPreReplaceString" und "userPostReplaceString" dienen zum Anordnen eines Strings an eine vorbestimmte Stelle der Seite, wobei mit dem Befehl "userPreReplaceString" der String unmittelbar nach Ausführung dieses Befehls an der entsprechenden Stelle angeordnet wird, wohingegen beim "userPostReplaceString" der String erst nach Abarbeitung aller Sprachelemente der Seite an der vorbestimmten Stelle angeordnet wird. Der durch den Befehl "userPreReplaceString" dargestellte String kann somit durch die weiteren vom Interpreter auszuführenden Sprachelemente noch verändert werden, wohingegen der durch den Befehl "userPostReplaceString" angeordnete String am Ende plaziert wird, wodurch eine Veränderung des Strings nicht mehr möglich ist.

Einer der mächtigsten Systembefehle ist "userSystem (...)", wobei in die Klammer ein Befehl des Betriebssystems des Servers oder eines weiteren auf dem Server installierten Programmes eingegeben werden kann. Hierdurch können mit dem Interpreter am Server eingerichtete Befehle und Programme aufgerufen werden. Dieser Befehl wird aus einer HTML-Seite aufgerufen.

Eine Untergruppe der Systembefehle sind Steuerungsbefehle, die z.B. zum Ansteuern eines bestimmten Druckers dienen. Diese Befehle entsprechen in der Regel dem jeweiligen Druckersystembefehlen, die als Befehl des Interpreters jeweils umgesetzt werden und durch weitere, höhere Steuerungsbefehle ergänzt werden können.

Die Strukturbefehle dienen zum Erstellen einer Programmstruktur mit Verzweigungen, Schleifen und dergleichen. Entsprechende Strukturbefehle sind z.B. "userFor", "userGoSub" oder "userIf".

Entsprechend der Syntax von HTML werden auch die vom Interpreter 18 ausführbaren Befehle in "<...>" gesetzt.

Bei den Befehlen des Interpreters 18 unterscheidet man zwei Klassen, nämlich eine mit Befehlen, die nicht direkt vom Client aufgerufen werden können, und eine weitere Klasse, deren Befehle direkt vom Client aufgerufen werden können. Von den oben beispielhaft angegebenen Befehle können diejenigen nicht vom Client aufgerufen werden, die mit "user" beginnen. Diese Unterteilung in zwei Klassen der Befehle dient der Sicherheit, denn wenn ein Anwender von einem beliebigen Client einen "userSystem" Befehl auf dem Server erzeugen könnte, könnte er den Server nach Belieben manipulieren. Zur Vermeidung einer solchen Manipulation ist der Speicher 17 in einen freien Speicherbereich 17a und in einen gesperrten Speicherbereich 17b unterteilt. Im freien Speicherbereich können vom Client Seiten aufgerufen werden und diese ggf. mit Parametern versorgt werden, wohingegen der gesperrte Speicherbereich 17b Seiten enthält, die nicht direkt vom Client Parameter erhalten oder von ihm aufgerufen werden können. Diese Seiten werden lediglich vom Interpreter aufgerufen. Der Interpreter kontrolliert hierbei die Parameterübergabe und die Programmausführung. Der Interpreter 18 ist derart ausgebildet, daß sicherheitsrelevante Befehle nur ausgeführt werden, wenn sie im gesperrten Speicherbereich 17b abgespeichert sind. Ein Anwender an einem der Clients kann lediglich den Inhalt des freien Speicherbereiches 17a lesen und direkt adressieren. Die im gesperrten Speicherbereich 17b abgelegten Seiten können nur indirekt über den Interpreter adressiert werden.

Der Administrator des Servers kann im gesperrten Speicherbereich 17b des Servers die zum Ansteuern der Geräte 8, 9 und 13 notwendigen Steuerprogramme hinterlegen, die in der Regel sicherheitsrelevant sind.

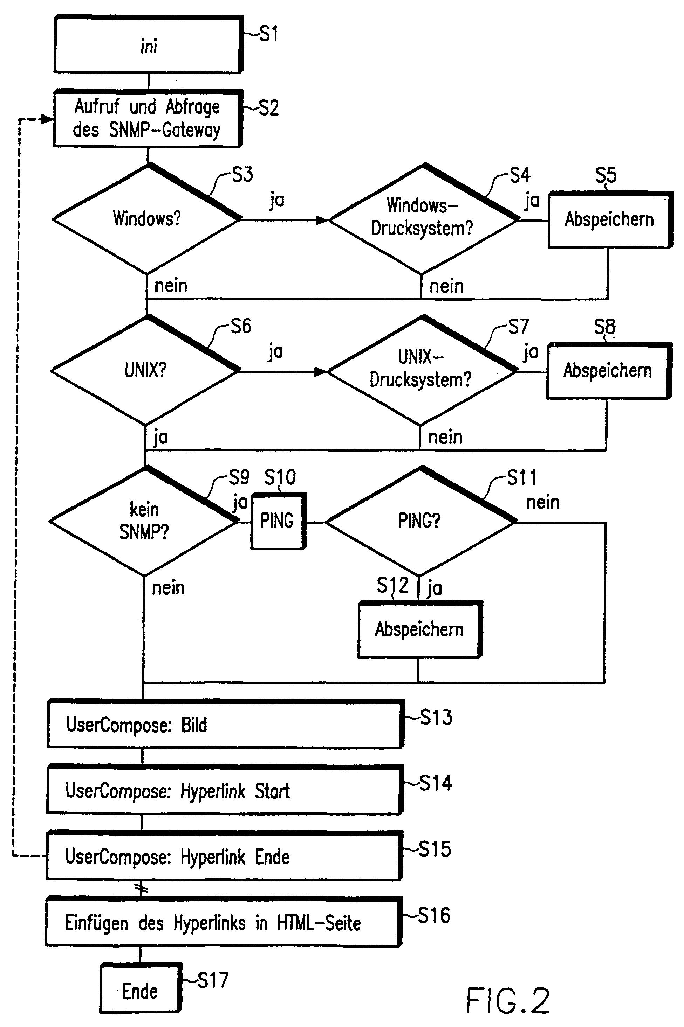

Nachfolgend wird der im Anhang angegebene Programmcode näher erläutert, dessen Programmablauf in Fig. 2 in einem Flußdiagramm dargestellt ist. Im Schritt S1 "ini" wird eine Initialisierung durchgeführt, wobei bestimmte Werte und Strings für jeweils abzufragende Server gesetzt bzw. definiert werden.

Mit dem Schritt S2 wird das SNMP-Gateway 12 aufgerufen, wobei durch den Wert "1" angegeben wird, daß von diesem Gateway etwas eingelesen werden soll, wobei das Ergebnis in "SNMPVALUE" gespeichert wird. Hierbei wird in Abhängigkeit von einer Benutzereingabe eine Adresse eines Datenbankeintrages (Managed Object einer MIB) abgefragt. Das Ergebnis dieser Abfrage stellt den Rechnertyp dar, der über die SNMP-Schnittstelle angesprochen wird.

Anhand des in der Variablen "SNMPVALUE" abgespeicherten Wertes wird im nächsten Schritt S3 geprüft, ob das Betriebssystem des über das SNMP-Gateway angesprochenen Rechners Windows ist. Falls das Betriebssystem Windows ist, verzweigt der Programmablauf auf die Abfrage S4, bei der erneut ein SNMP-Wert eingelesen wird und anhand dieses Wertes geprüft wird, ob an dem Rechner ein vorbestimmtes, unter Windows lauffähiges Drucksystem ("Imagestream") eingerichtet ist. Falls die Abfrage S4 das Vorhandensein eines derartigen Drucksystemes ergibt, wird dies im Schritt S5 abgespeichert.

Nach dem Speichervorgang im Schritt S5 bzw. falls eine der Abfragen S3 oder S4 verneint worden ist, geht der Programmablauf auf den Schritt S6 über, mit dem geprüft wird, ob das Betriebssystem des über das SNMP-Gateway angesprochenen Rechners ein Unix-Betriebssystem ist. Ergibt die Abfrage, daß das Betriebssystem ein Unix-Betriebssystem ist, wird der Programmablauf auf den Schritt S7 verzweigt, mit dem wiederum ein SNMP-Wert eingelesen wird, anhand dessen geprüft wird, ob ein Unix-Betriebssystem (PJM bzw. Prisma) an dem Rechner eingerichtet ist. Ergibt die Abfrage ein derartiges Drucksystem, so wird dies im Schritt S8 abgespeichert.

Nach dem Speichervorgang des Schrittes S8 oder wenn eine der beiden Abfragen der Schritte S6 und S7 negativ ausgefallen ist, geht der Programmablauf auf einen Schritt S9 über, mit dem geprüft wird, ob der über das SNMP-Gateway angesprochene Rechner überhaupt ein mittels des SNMP-Protokolls ansteuerbarer Rechner ist. Ergibt die Abfrage, daß der Rechner mittels des SNMP-Protokoll grundsätzlich ansteuerbar ist, so wird im Schritt S10 eine PING-Abfrage aufgerufen und im Schritt S11 das Ergebnis der PING-Abfrage geprüft, ob der Rechner in Betrieb (on-line) ist. Ergibt diese Abfrage S11, daß der Rechner in Betrieb ist (on-line), so wird dies im Schritt S12 gespeichert, wohingegen, wenn der Rechner nicht in Betrieb (off-line) ist, dann entspricht dies der default-Einstellung, so daß keine zusätzliche Abspeicherung notwendig ist.

Die PING-Abfrage ist ein nicht nur im Internet vorhandener Programmbaustein, der an vielen Servern eingerichtet ist. Er wird deshalb mit der bereits oben beschriebenen Funktion "userSystem" aufgerufen oder als eigenständiger Befehl in den Interpreter integriert. Eine erneute Programmierung dieses Programmbausteins erübrigt sich somit.

Nach dem Speichervorgang des Schrittes S12 oder falls die Abfrage im Schritt S9 ergab, daß der Rechner ein SNMP-Rechner ist oder falls die Abfrage im Schritt S11 ergab, daß der Rechner nicht in Betrieb ist, geht der Programmablauf auf den Schritt S13 über, mit dem ein das Drucksystem darstellendes Bild aufgenommen wird. Dies erfolgt mit dem Befehl "userCompose", mit dem die durch die obigen Abfragen und Speichervorgänge belegte Variable "SNMPVALUE" ausgewertet wird (siehe Zeile unterhalb des Befehles "userCompose"), wobei das Ergebnis "exclusiv" ist. Dies ist in der darauffolgenden Zeile durch den Wert "false" vorgegeben. Dies bedeutet, daß nur ein einziges Bild in die Variable "REPLACEMENT" eingelesen werden kann. Je nach dem obigen Ergebnis, wird ein Bild für ein, ein Imagestream-Drucksystem (imagestream.gif), ein Prisma-Drucksystem (Prisma.gif) oder ein Bild für eine erfolgreiche PING-Abfrage (ping.gif) oder ein Bild für den nicht-Betriebszustand des Rechners (offline.gif) oder ein Bild für einen mittels des SNMP-Protokoll ansprechbaren Rechners (SNMP.gif) eingelesen.

In den nachfolgenden Schritten S14 und S15 wird wiederum mittels des Befehls "userCompose" eine Hyperlink-Start-Variable ("SnmpHLStart") bzw. eine Hyperlink-Ende-Variable ("SnmpHLEnd) mit den zum Erzeugen eines Hyperlinks notwendigen Strings belegt. Ein Hyperlink ist ein automatisierter Aufruf einer Datei des Servers, wobei ein Client die entsprechende URL an den die Datei aufweisenden Server sendet.

In Figur 2 ist gestrichelt ein Programmpfeil vom Schritt S15 zum Schritt S2 eingezeichnet, der den Programmabschnitt zwischen den Schritten S2 und S15 zu einer Schleife schließt. Mit diesem Programmpfeil wird ausgedrückt, daß dieser Programmabschnitt mehrfach zum Abfragen mehrerer über das SNMP-Gateway erreichbare Rechner ausgeführt wird. Die Abfragen der einzelnen Rechner werden parallel ausgeführt. Dies ist möglich, da das SNMP-Gateway multitasking-fähig ist.

Im nachfolgenden Schritt S16 werden die den Hyperlink darstellenden Strings mittels des Befehls "userPostReplaceString" in die Datei bzw. HTML-Seite an eine vorbestimmte Stelle eingefügt.

Mit dem oben beschriebenen Programm wird somit abgefragt, ob mit dem SNMP-Gateway ein oder mehrere bestimmte Rechner angesprochen werden können und ob an einem der ansprechbaren Rechner ein bestimmtes Drucksystem eingerichtet ist. Ein entsprechendes Bild wird dann eingelesen und ein auf den Rechner verweisender Link generiert und in der HTML-Seite abgelegt. Wird nun die HTML-Seite zum Client übertragen, so kann entweder der Link manuell oder automatisch ausgeführt werden, womit eine Verbindung vom Client, der die Abfrage gestartet hat, direkt zum Rechner mit dem abgefragten Drucksystem hergestellt wird.

Der Client wurde somit von einem Server zu einem weiteren Server vermittelt, wobei der erste Server für den Client ein Drucksystem gesucht hat, mit dem vom Client aus dann direkt entsprechende Druckaufträge ausgeführt werden können. Die Suchund Vermittlungsprozedur ist vollständig am Server ausgeführt worden, das zeigt, daß die notwendige "Intelligenz" lediglich am Server vorgesehen sein muß und vom Client mit einem herkömmlichen Browser abgefragt und bedient werden kann.

Das obige Programm ist lediglich ein stark vereinfachtes und verkürztes Beispiel für eine Abfrage von erreichbaren Drucksystemen und automatischer bzw. halbautomatischer Vermittlung an ein gewünschtes Drucksystem. Dieses Beispiel soll lediglich andeuten, welche Möglichkeiten durch das erfindungsgemäße Vorsehen eines Interpreters am Server geschaffen werden.

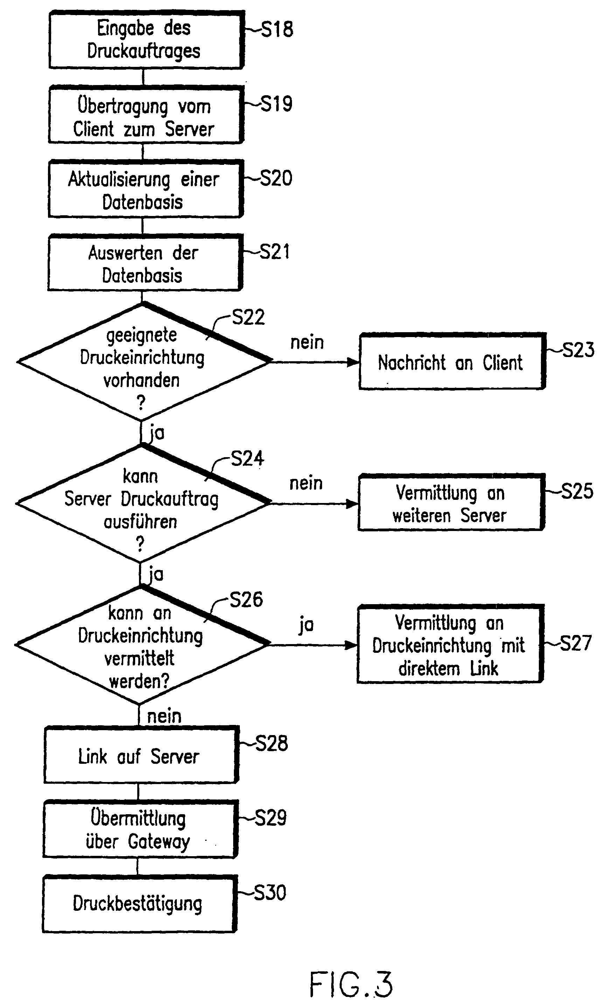

In Fig. 3 ist ein Flußdiagramm dargestellt, mit welchem gezeigt wird, wie ein Druckauftrag mit dem erfindungsgemäßen Netzwerk abgearbeitet werden kann. Ein Anwender gibt in einem Schritt S18 seinen Druckauftrag ein und ergänzt ihn durch bestimmte Wünsche an die Qualität der Druckerzeugnisses (farbig, Papierart, usw.) und notwendigen Druckmerkmalen (Anzahl der Kopien, Format, usw.).

Dieser Druckauftrag wird im Schritt S19 vom Client 3, 4 zum Server 1, 2 übertragen. Am Server wird eine Datenbasis, die die relevanten Daten für Verbindungen zu Druckern bzw. weiteren Servern mit angeschlossenen Druckern bzw. entsprechenden Vorund Nachbearbeitungsgeräten enthält, aktualisiert S20. Die Aktualisierung S20 erfolgt, indem eines oder mehrere Gateways nach entsprechenden Drucksystemen abgefragt werden. Die hierbei ermittelten Daten werden in der im Server abgelegten lokalen Datenbasis eingetragen.

Diese aktualisierte Datenbasis wird nach den vom Anwender eingegebenen Parametern (Druckauftrag, Wünsche und Voraussetzungen) im Schritt S21 ausgewertet.

Anschließend wird mit einer Abfrage S22 geprüft, ob bei der Auswertung eine für den Druckauftrag geeignete Druckeinrichtung gefunden worden ist. Falls keine geeignete Druckeinrichtung gefunden worden ist, zweigt der Programmablauf auf den Schritt S23 ab, mit dem an den Client eine Nachricht gesandt wird, daß der Druckauftrag nicht ausführbar ist.

Ergibt die Abfrage im Schritt S22 hingegen, daß eine geeignete Druckeinrichtung vorhanden ist, wird mit einer weiteren Abfrage S24 geprüft, ob der Druckauftrag vom Server ausgeführt werden kann. Falls das Ergebnis dieser Abfrage nein ist, wird, wie es anhand des Programmbeispieles aus Fig. 2 dargestellt worden ist, der Client zu einem weiteren Server vermittelt S25, der den Druckauftrag ausführen kann. Hierbei wird vorzugsweise der Druckauftrag zusammen mit den Parametern, (Wünsche und Voraussetzungen) direkt an den weiteren Server übermittelt, wobei die Parameter bei Bedarf entsprechend modifiziert werden können.

Ergibt die Abfrage S24 hingegen, daß der Druckauftrag vom vorliegenden Server ausgeführt werden kann, wird in einer weiteren Abfrage S26 geprüft, ob der Druckauftrag direkt an die Druckeinrichtung vermittelt werden kann. Besitzt die Druckeinrichtung eine entsprechende Netzankopplung, so kann ein direkter Link auf die Druckeinrichtung erzeugt werden, wodurch der Server nicht weiter durch den Druckauftrag belastet ist.

Ergibt die Abfrage aus dem Schritt S26, daß eine direkte Vermittlung des Druckauftrages an die Druckeinrichtung möglich ist, so wird diese im Schritt S27 ausgeführt.

Ist eine solche Vermittlung nicht möglich, so wird mit dem Schritt S28 ein Link auf den Server bzw. sein Gateway gesetzt, um die Druckdaten im Schritt S29 über das Gateway zur Druckeinrichtung zu übermitteln. Nach Beendigung des Druckvorganges erfolgt eine Druckbestätigung S30 vom Server zum Client, womit das Verfahren beendet ist.

Bei diesem Verfahren wird der Druckauftrag automatisch zu einer geeigneten Druckeinrichtung weitergeleitet. Es wird sozusagen zwischen einzelnen Servern und Druckeinrichtungen ausgehandelt, wer zur Abarbeitung des Druckauftrages zur Verfügung steht und geeignet ist. Man bezeichnet deshalb ein solches Verfahren auch als "Trading".

Wie es oben dargestellt ist, ist das erfindungsgemäße Netzwerk insbesondere zur Ausbildung eines dezentralisierten Drucksystems geeignet, das einen oder mehrere Druckserver umfassen kann. Bei einer Internet-Anwendung des Druckservers kann jeder Internet-Client, der eine entsprechende Zugangsberechtigung zum Server besitzt, diesen für seine Druckaufträge benutzen. Die technische Realisierung eines solchen dezentralisierten Drucksystems ist äußerst einfach und setzt lediglich die Installation eines erfindungsgemäßen Interpreters voraus, in dem die entsprechenden Befehle zum Ansteuern der Druckeinrichtungen bzw. der Vor- und Nachbearbeitungsgeräte eingerichtet sind. In einem einzigen Netzwerk können mehrere Server mit einem erfindungsgemäßen Interpreter versehen sein. Hierdurch ist es auch möglich, daß ein Druckauftrag zwischen mehreren Servern weitergereicht wird.

Die Erfindung ist jedoch nicht auf ein Drucksystem beschränkt, sondern kann zur Ansteuerung, Überwachung, Wartung, usw. von beliebigen Geräten verwendet werden. So bestehen zur Zeit erhebliche Bestrebungen Haushaltsgeräte netzwerkfähig zu machen. Mit einem erfindungsgemäßen Server können sie von einem Anwender über das Internet von einer beliebigen Stelle überprüft, abgefragt und evtl. in Betrieb gesetzt werden. Grundsätzlich ist die Verwaltung und Steuerung aller technischen Geräte mit dem erfindungsgemäßen Netzwerk möglich. Insbesondere eignet es sich zur Verwaltung von Datenverarbeitungssystemen, Telekommuniktationssystemen und Vermittlungssystemen, wobei es insbesondere für überregionale Systeme von Vorteil ist, da der erfindungsgemäße Server von einer beliebigen Stelle des Netzwerkes aus angesteuert werden kann.

Ein weiterer, wesentlicher Vorteil des erfindungsgemäßen Netzwerkes ist, daß durch das Vorsehen eines Interpreters es nicht auf eine bestimmte Anwendung beschränkt ist, sondern durch die Gestaltungsmöglichkeit einer Computersprache es möglich ist, mit hochspracheähnlichen Sprachelementen die jeweilige Anwendung zu generieren. Hierdurch besitzt das erfindungsgemäße System eine maximale Flexibilität. Für die meisten Anwendungen gibt es bereits spezialisierte Programmteile, die lediglich in den Interpreter integriert werden müssen. Derartige Programmteile sind z.B. Gateways, Druckertreiber, Spooler oder sonstige singuläre Steuerprogramme. Insbesondere können spezialisierte Kommunikationsprotokolle, wie SNMP oder DMI für die lokale -Datenübertragung zu den Druckeinrichtungen ausgenutzt werden, da diese Protokolle im Gegensatz zu dem HTTP-Protokoll einen wesentlich geringeren Protokolloverhead, geringere Responsezeiten und eine hohe Leistung besitzen und eine einfache Anwendung erlauben. Diese spezialisierten Protokolle bzw. spezifischen Schnittstellen können einem Anwender zugänglich gemacht werden, der sich weder mit dieser Technik auseinandersetzen muß, noch auf seinem Client eine entsprechende, in der Regel sehr aufwendige Software installieren muß, um eine Kommunikation zu derartigen spezialisierten Systemen herstellen zu können.

Der erfindungsgemäße Interpreter kann auf einen Datenträger gespeichert sein und von diesem oder über ein Netzwerk in einen Server geladen werden.

Die Erfindung kann folgendermaßen kurz zusammengefaßt werden:

Die vorliegende Erfindung betrifft ein Client-Server-Netzwerk, einen am Server des Netzwerkes installierbaren Interpreter und ein Verfahren zum Betreiben eines derartigen Client-Server-Netzwerkes.

Die Erfindung zeichnet sich dadurch aus, daß am Server Dateien abgelegt werden, die vom Client abgerufen werden können und die erfindungsgemäß sowohl am Client ausführbare Sprachelemente als auch am Server ausführbare Sprachelemente aufweisen. Am Server ist ein Interpreter vorgesehen, der die am Server ausführbaren Sprachelemente interpretiert und zur Ausführung bringt.

Nach einer bevorzugten Ausführungsform der Erfindung entsprechen die am Client ausführbaren Sprachelemente einer Markup-Sprache, wie z. B. SGML, XML, HTML, da dann der Benutzer beim Einrichten dieser Dateien seine bekannten Hilfsmittel zum Erstellen der Dateien, die in der Regel geläufige Textverarbeitungsprogramme sind, verwenden kann, um am Server des Netzwerkes individuelle Anwendungen vorzusehen, die von einem beliebigen Client mit einem herkömmlichen Browser aufgerufen werden können.

Die Erfindung eignet sich besonders zur Steuerung von Geräten, insbesondere von Druckern und Drucksystemen und den entsprechenden Vor- und Nachbearbeitungsgeräten, da die Steuerungsintelligenz zentral am Server hinterlegt wird und somit von vielen Clients benutzt werden kann, und der Datentransfer zwischen den Clients und dem Server gering gehalten wird.

Ein weiterer Aspekt der Erfindung ist, daß mit einfachen Mitteln ein Trading von z. B. Druckaufträgen zwischen mehreren Servern realisiert werden kann.

### Anhang

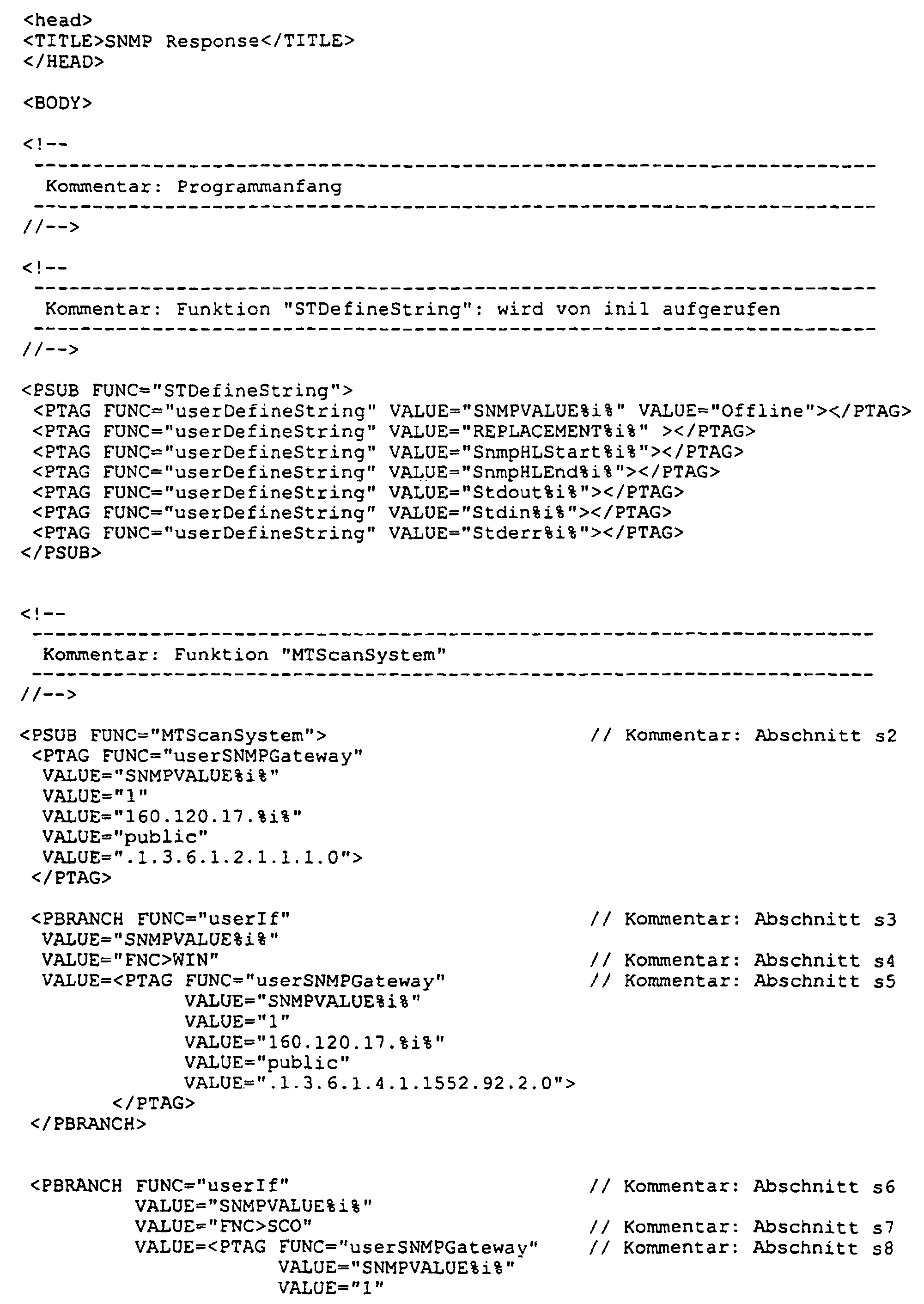

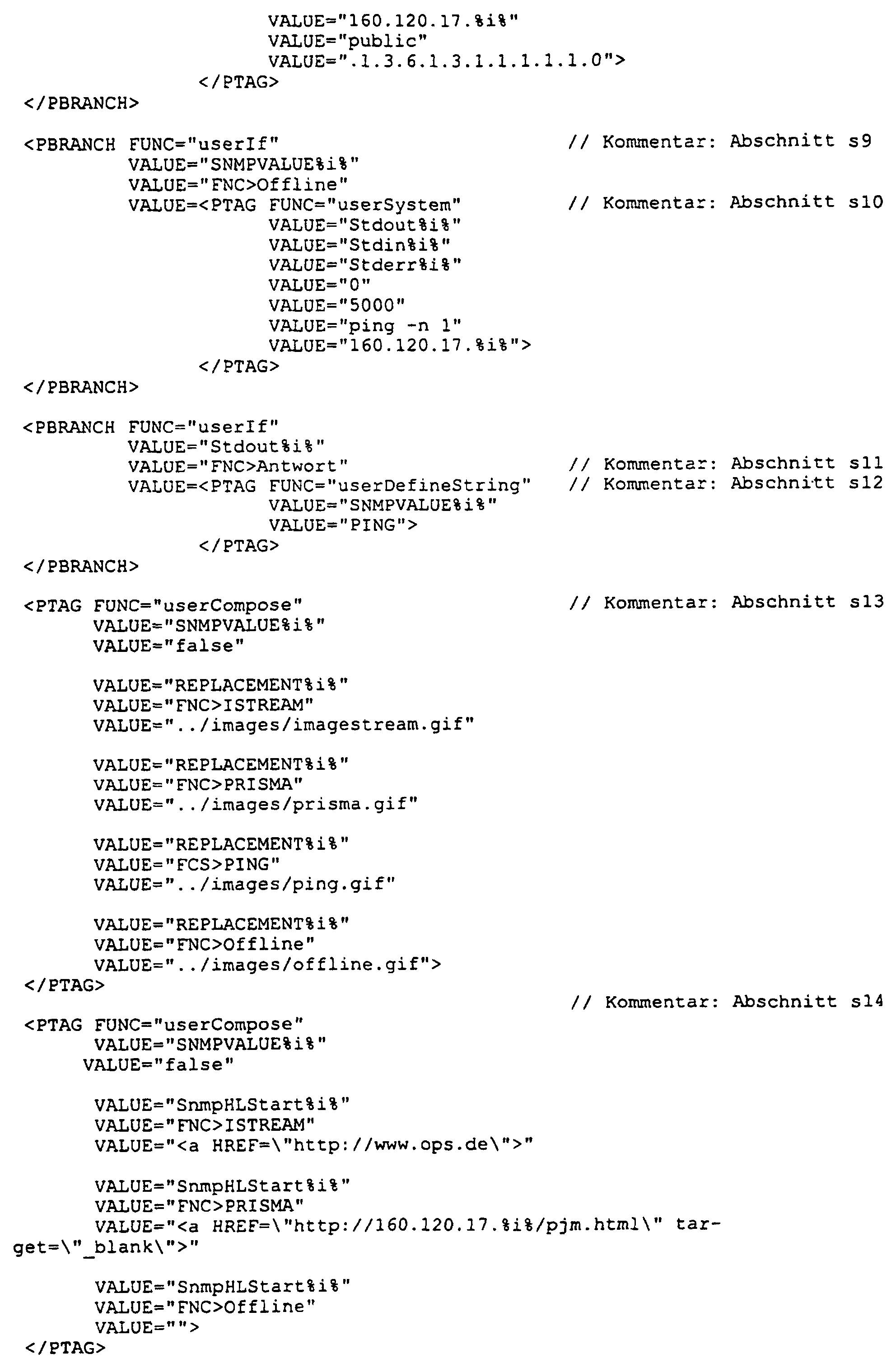

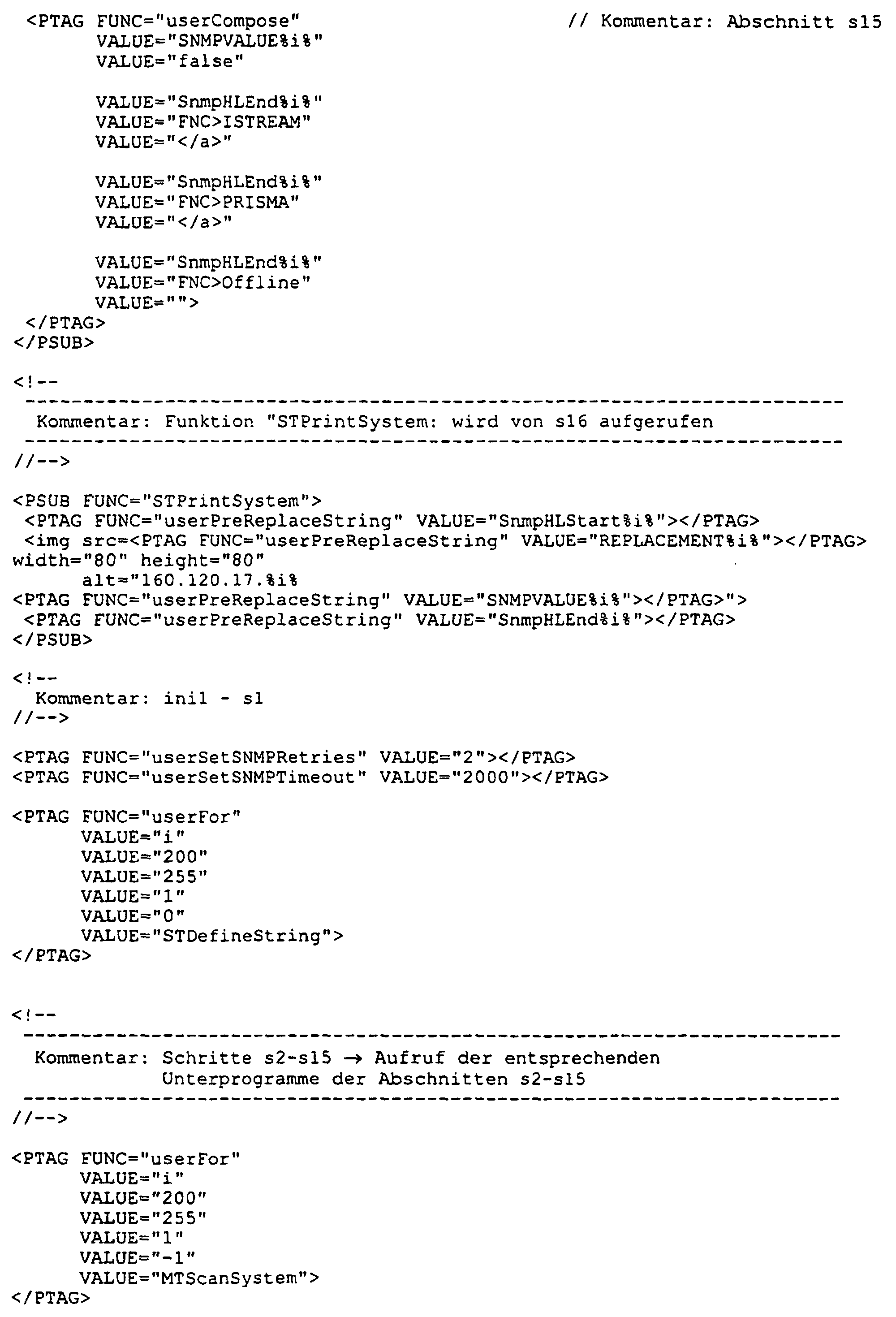

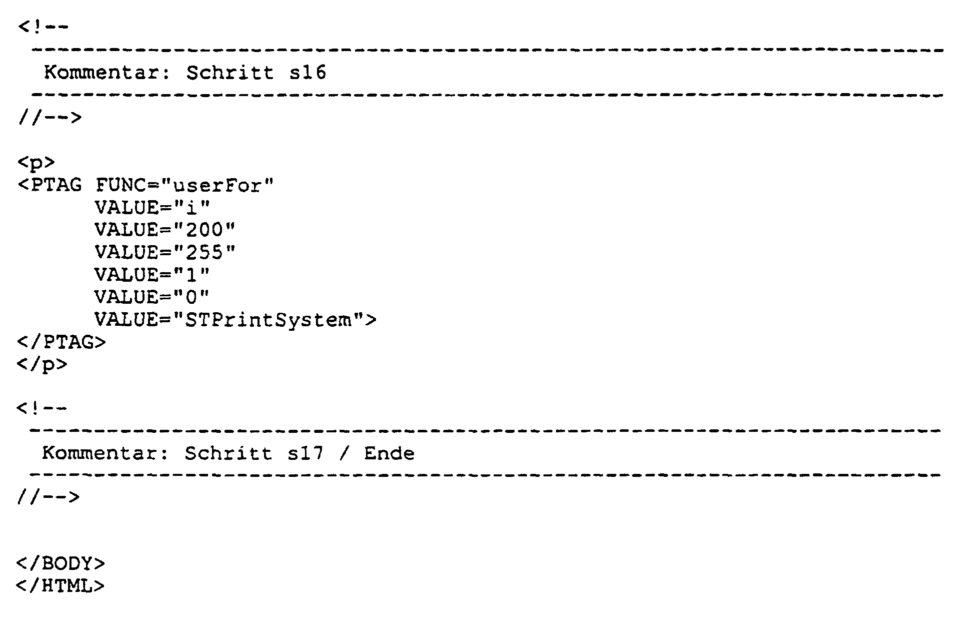

### Bezugszeichenliste

- 1: erster Web-Server
- 2: zweiter Web-Server
- 3: erster Client
- 4: zweiter Client
- 5: Datenleitung (Intranet)
- 6: Datenleitung (Intranet)
- 7: Datenverbindung (Internet)
- 8: Gerät
- 9: Gerät
- 10: Serielle Leitung
- 11: SNMP-Verbindung
- 12: Gateway
- 13: Gerät
- 14: Leitung
- 15: Kommunikationsprogramm
- 16: WWW-Dienstprogramm
- 17: Speicher
- 17a: freier Speicherbereich
- 17b: gesperrter Speicherbereich
- 18: Interpreter

### Verfahrensschritte

- S1: Initialisierung
- S2: Aufruf und Abfrage des SNMP-Gateway
- S3: Windows?
- S4: Windows-Drucksystem?
- S5: Abspeichern
- S6: UNIX?
- S7: UNIX-Drucksystem?
- S8: Abspeichern
- S9: kein SNMP?
- S10: PING
- S11: PING?
- S12: Abspeichern
- S13: UserCompose: Bild
- S14: UserCompose: Hyperlink Start
- S15: UserCompose: Hyperlink Ende
- S16: Einfügen des Hyperlinks in HTML-Seite
- S17: Ende
- S18: Eingabe des Druckauftrages
- S19: Übertragung vom Client zum Server
- S20: Aktualisierung einer Datenbasis
- S21: Auswertung der Datenbasis
- S22: Geeignete Druckeinrichtung?
- S23: Nachricht an Client
- S24: Kann Server Druckauftrag ausführen?
- S25: Vermittlung an weiteren Server
- S26: Kann an Druckeinrichtung vermittelt werden?
- S27: Vermittlung an Druckeinrichtung mit direktem Link
- S28: Link auf Server
- S29: Übermittlung über Gateway
- S30: Druckbestätigung

## Patentansprüche

1. Netzwerk zum Zusammenschluß von Rechnern, mit zumindest einen Server (1, 2) und einen Client (3, 4), und wobei der Server (1, 2) derart ausgebildet ist, daß am Server (1, 2) gespeicherte Dateien vom Server (1, 2) zum Client (3, 4) übertragen werden, wenn sie der Client (3, 4) durch Senden einer entsprechenden Dateiadresse an den Server (1, 2) abruft, und die Dateien sowohl am Client (3, 4) ausführbare Sprachelemente als auch am Server (1, 2) ausführbare Sprachelemente enthalten, dadurch gekennzeichent, dass am Server (1, 2) ein Interpreter zum Interpretieren und Ausführen der am Server ausführbaren Sprachelemente vorhanden ist, und
am Server (1, 2) ein Gateway (12) installiert ist, das eine Datenverbindung zu einem weiteren logischen und/oder physikalischen System herstellen kann, wobei die Daten des weiteren Systems ein anderes Format als die zwischen dem Server (1, 2) und dem Client (3, 4) ausgetauschten Daten aufweisen, und das Gateway (12) derart ausgebildet ist, daß es sowohl die einkommenden als auch die ausgehenden Daten in die entsprechenden Datenformate automatisch umsetzt, und
dass das Gateway (12) im Interpreter integriert ist und durch Sprachelemente des Interpreters (18) aufrufbar ist.

2. Netzwerk nach Anspruch 1,
wobei mehrere Gateways (12) im Interpreter integriert sind und durch Sprachelemente des Interpreters (18) aufrufbar sind.

3. Netzwerk nach Anspruch 1 oder Anspruch 2,
wobei der Interpreter (18) am Server (1, 2) derart ausgebildet ist, daß die am Server ausführbaren Sprachelemente nach dem Aufrufen der Dateien durch einen Client und vor
der Übermittlung der Dateien zum Client (3, 4) am Server (1, 2) ausgeführt werden.

4. Netzwerk nach einem der Ansprüche 1 bis 3,
wobei die Dateiadresse dem URL-Format entspricht und der Server (1, 2) ein Web-Server ist, so daß die Dateien mit einem am Client (3, 4) installierten Internet-Browser abgerufen werden können.

5. Netzwerk nach einem der Ansprüche 1 bis 4,
wobei die am Server (1, 2) gespeicherten und vom Client (3, 4) abrufbaren Dateien dem Format einer Markup-Sprache entsprechen, das durch die am Server ausführbaren Sprachelemente erweitert ist.

6. Netzwerk nach einem der Ansprüche 1 bis 5,
wobei jeweils ein Gateway (12) zum Umsetzen von Daten in eines oder mehrere der folgenden Formate vorgesehen ist: SNMP, LP, PJMweb, ftp.

7. Netzwerk nach Anspruch 6,
wobei das bzw. die Gateways (12) im Interpreter integriert sind und durch Sprachelementen des Interpreters (18) aufgerufen werden können.

8. Netzwerk nach einem der Ansprüche 1 bis 7,
wobei am Server (1, 2) Programme zum Ansteuern zumindest eines Druckers und/oder Vor- oder Nachverarbeitungsgerätes installiert sind, und diese Programme vom Interpreter (18) aufgerufen werden können.

9. Interpreter für ein Netzwerk nach einem der vorhergehenden Ansprüche, der an einem Server (1, 2) des Netzwerkes zum Zusammenschluss von Rechnern installierbar ist und zum Interpretieren und Ausführen von am Server (1, 2) ausführbaren Sprachelementen ausgebildet ist, die in am Server (1, 2) abgespeicherten Dateien enthalten sind, wobei diese Dateien von einem Client (3, 4) mittels der Übertragung einer Adresse abgerufen werden können und zusätzliche am Client (3, 4) ausführbare Sprachelemente enthalten.

10. Interpreter nach Anspruch 9, wobei der Interpreter einen Befehl zum Erzeugen von String-Einträgen in der Datei aufweist.

11. Interpreter nach Anspruch 9 oder 10,
mit einem Befehl zum Setzen von String-Einträgen an eine vorbestimmte Stelle der Datei.

12. Interpreter nach einem der Ansprüche 9 bis 11,
mit einem Befehl zum Einlesen eines vom Client (3, 4) an den Server (1, 2) übertragenen Strings und zum Abspeichern des Strings in eine vorbestimmte Variable.

13. Interpreter nach einem der Ansprüche 9 bis 12,
mit einem Befehl zum Aufrufen eines Gateways und Abfragen eines mit dem Gateway verbundenen Systems.

14. Interpreter nach einem der Ansprüche 9 bis 13,
wobei der Interpreter eine Gruppe von Client-Befehlen umfaßt, die sowohl vom Client aus als auch vom Server aus aufgerufen werden können, und eine Gruppe von Serverbefehlen umfaßt, die nur vom Server aus aufgerufen werden können.

15. Datenträger, auf dem ein Interpreter nach einem der Ansprüche 9 bis 14, gespeichert ist.

16. Verfahren zum Betreiben eines Netzwerkes zum Zusammenschluß von Rechnern, das mindestens einen Server (1, 2) und mindestens einen Client (3, 4) umfaßt, wobei im Server (1, 2) gespeicherte, sowohl im Server (1, 2) als auch in einem Client ausführbare Dateien von dem Server (1, 2) zu dem Client (3, 4) übertragen werden, wenn sie der Client (3, 4) durch Senden einer entsprechenden Dateiadresse an den Server (1, 2) abruft, und der Server jeweils einen oder mehrere Dienste anbietet, wobei bei einer Client-Anfrage nach einem bestimmten Dienst mit bestimmten, den Dienst zugrundeliegenden Parametern, der abgefragte Server bestimmt, ob er den Dienst erfüllen kann, und wenn der Server feststellt, dass er den Dienst nicht erfüllen kann, er einen weiteren Server oder an ein am Netzwerk angeschlossenes Gerät an den Client vermittelt, das den Dienst ausführen kann, **dadurch gekennzeichnet, daß** ein an mindestens einem der Server (1,2) vorhandener Interpreter am Server (1,2) ausführbare Sprachelemente interpretiert und ausführt, wobei die Sprachelemente in am Server (1,2) abgespeicherten Dateien erhalten sind und wobei diese Dateien von dem Client (3,4) mittels der Übertragung einer Adresse abgerufen werden und zusätzliche am Client (3,4)ausführbare Sprachelemente enthalten.

17. Verfahren zum Betreiben eines Netzwerkes nach Anspruch 16, wobei einer der von den Servern angebotenen Dienste die Ausführung eines Druckauftrages ist, und der Server den Druckauftrag an einen anderen Server oder direkt an eine Druckeinrichtung weiterleitet, wenn der Server den Druckauftrag nicht selbst ausführen kann.

18. Verfahren zum Betreiben eines Netzwerkes nach Anspruch 16 oder 17,
wobei der Server eine Datenbank aufweist, in der Informationen zu den im Netzwerk angebotenen Diensten abgespeichert sind und wobei bei einer Client-Anfrage anhand dieser Datenbank ermittelt wird, ob der gewünschte Dienst im Netzwerk vorhanden ist.

19. Verfahren zum Betreiben eines Netzwerkes nach einem der
Ansprüche 16 bis 18,
wobei die Vermittlung an einen weiteren Server oder ein an das Netzwerk angeschlossenes Gerät durch Erzeugen der Adresse des weiteren Servers oder des Gerätes und durch Übermittlung der Adresse an den anfragenden Client ausgeführt wird.

20. Verfahren zum Betreiben eines Netzwerkes nach einem der Ansprüche 16 bis 19, in dem ein Interpreter nach einem der Ansprüche 10 bis 15 verwendet wird.

## Claims

1. A network for the interconnection of computers, with at least one server (1, 2) and a client (3, 4), and wherein the server (1, 2) is fashioned such that data files stored at the server (1, 2) are transmitted from the server (1, 2) to the client (3, 4) when the client (3, 4) calls them by sending a corresponding data file address to the server (1, 2), and the data files contain both language elements executable at the client (3, 4) as well as language elements executable at the server (1, 2), **characterized in that** an interpreter is present at the server (1, 2) for interpretation and execution of the language elements executable at the server, and
a gateway (12) is installed at the server (1, 2) that can set up a data connection to a further logical and/or physical system, the data of the further system comprising a different format than the data exchanged between the server (1, 2) and the client (3, 4), and the gateway (12) is fashioned such that it automatically converts both the incoming as well as the outgoing data into the appropriate data formats, and
**in that** the gateway (12) is integrated in the interpreter and can be called by language elements of the interpreter (18).

2. The network according to claim 1,
wherein a plurality of gateways (12) are integrated in the interpreter and can be called by language elements of the interpreter (18).

3. The network according to claim 1 or claim 2,
wherein the interpreter (18) is fashioned such at the server (1, 2) that the language elements executable at the server are executed at the server (1, 2) after the calling of the data files by a client and before the transmission of the data files to the client (3, 4).

4. The network according to one of the claims 1 to 3,
wherein the data file address corresponds to the URL format and the server (1, 2) is a web server so that the data files can be called with an Internet browser installed at the client (3, 4).

5. The network according to one of the claims 1 to 4,
wherein the data files stored at the server (1, 2) and fetchable by the client (3, 4) correspond to the format of a mark-up language that is expanded by the language elements executable at the server.

6. The network according to one of the claims 1 to 5,
wherein a respective gateway (12) is provided for the conversion of the data in one or more of the following formats: SNMP, LP, PJMweb, ftp.

7. The network according to claim 6,
wherein the gateway or, respectively, the gateways (12) are integrated in the interpreter and can be called by language elements of the interpreter (18).

8. The network according to one of the claims 1 to 7,
wherein programs for the drive of at least one printer and/or pre-processing or post-processing device are installed at the server (1, 2) and these programs can be called by the interpreter (18).

9. An interpreter for a network according to one of the preceding claims, that can be installed at a server (1, 2) of the network for the interconnection of computers and is fashioned for the interpretation and execution of language elements executable at the server (1, 2) that are contained in data files stored at the server (1, 2), wherein these data files can be fetched by a client (3, 4) with the transmission of an address and contain additional language elements executable at the client (3, 4).

10. The interpreter according to claim 9, wherein the interpreter comprises a command for generating string entries in the data file.

11. The interpreter according to claim 9 or 10,
comprising a command for setting string entries at a predetermined location of the data file.

12. The interpreter according to one of the claims 9 to 11,
comprising a command for reading in a string transmitted from the client (3, 4) to the server (1, 2) and for storing the string into a predetermined variable.

13. The interpreter according to one of the claims 9 to 12,
comprising a command for calling a gateway and querying a system connected to the gateway.

14. The interpreter according to one of the claims 9 to 13,
wherein the interpreter comprises a group of client commands that can be called both proceeding from the client as well as from the server, and comprises a group of server commands that can only be called proceeding from the server.

15. A data carrier, on which an interpreter according to one of the claims 9 to 14 is stored.

16. A method for operating a network for the interconnection of computers that comprises at least a server (1, 2) and at least a client (3, 4), wherein data files stored at the server (1, 2) and executable both in the server (1, 2) as well as in the client are transmitted from the server (1, 2) to the client (3, 4) when the client (3, 4) calls them by sending a corresponding data file address to the server (1, 2), and each server respectively offers one or more services, wherein, in the case of a client inquiry for a specific service with specific parameters on which the service is based, the queried server determines whether it can perform the service, and when the server determines that it cannot perform the service, it switches a further server or a device connected to the network that can execute the service to the client, **characterized in that** an interpreter provided at at least one of the servers (1, 2) interprets and executes language elements executable at the server (1, 2), the language elements being contained in data files stored at the server (1, 2) and these data being called by the client (3, 4) by means of the transmission of an address and containing additional language elements executable at the client (3, 4).

17. The method for operating a network according to claim 16, wherein one of the services offered by the servers is the execution of a print job, and the server forwards the print job to another server or directly to a printer device when the server itself cannot execute the print job.

18. The method for operating a network according to claim 16 or 17,
wherein the server comprises a data base in which information about the services offered in the network are stored, and wherein, in the case of a client query, a determination can be made on the basis of these data base as to whether the desired service is present in the network.

19. The method for operating a network according to one of the claims 16 to 18, wherein the switching to a further server or to a device connected to the network is implemented by generating the address of the further server or of the device and by communicating the address to the querying client.

20. The method for operating a network according to one of the claims 16 to 19, in which an interpreter according to one of the claims 10 to 15 is used.

## Revendications

1. Réseau permettant de connecter des unités centrales de traitement, comportant au moins un serveur (1, 2) et un client (3, 4), le serveur (1, 2) étant configuré de telle sorte que les fichiers enregistrés sur ledit serveur (1, 2) sont transmis du serveur (1, 2) au client (3, 4) lorsque le client (3, 4) les appelle en envoyant une adresse de fichier correspondante au serveur (1, 2), et les fichiers contiennent aussi bien des éléments de langage exécutables chez le client (3, 4) que des éléments de langage exécutables sur le serveur (1, 2), **caractérisé en ce que** :
sur le serveur (1, 2), il existe un interpréteur permettant d'interpréter et d'exécuter les éléments de langage exécutables sur le serveur, et
sur le serveur (1, 2) est installée une passerelle (12), qui peut établir une communication de données vers un autre système logique et / ou physique, moyennant quoi les données de l'autre système présentent un autre format que les données échangées entre le serveur (1, 2) et le client (3, 4), et la passerelle (12) est configurée de telle sorte qu'aussi bien les données entrantes que les données sortantes sont automatiquement converties dans le format de données correspondant, et
la passerelle (12) est intégrée dans un interpréteur, et peut être appelée par les éléments de langage de l'interpréteur (18).

2. Réseau selon la revendication 1, dans lequel plusieurs passerelles (12) sont intégrées dans l'interpréteur et peuvent être appelées par les éléments de langage de l'interpréteur (18).

3. Réseau selon l'une quelconque des revendications 1 ou 2, dans lequel l'interpréteur (18) est configuré sur le serveur (1, 2) de telle sorte que les éléments de langage exécutables sur le serveur sont exécutés sur le serveur (1, 2), après l'appel des fichiers par un client et avant la transmission des fichiers au client (3, 4).

4. Réseau selon l'une quelconque des revendications 1 à 3, dans lequel l'adresse de fichier correspond au format URL, et le serveur (1, 2) est un serveur Web, de sorte que les fichiers peuvent être consultés grâce à un navigateur Internet installé chez le client (3, 4).

5. Réseau selon l'une quelconque des revendications 1 à 4, dans lequel les fichiers enregistrés sur le serveur (1, 2) et pouvant être consultés par le client (3, 4) correspondent au format d'un langage de balisage, qui est étendu par les éléments de langage exécutables sur le serveur.

6. Réseau selon l'une quelconque des revendications 1 à 5, dans lequel il est chaque fois prévu une passerelle (12) permettant de convertir les données dans un ou plusieurs des formats suivants : SNMP, LP, PJMweb, ftp.

7. Réseau selon la revendication 6, **caractérisé en ce que** la ou les passerelles (12) est/sont intégrée(s) dans l'interpréteur et peut/peuvent être appelée(s) par les éléments de langage de l'interpréteur (18).

8. Réseau selon l'une quelconque des revendications 1 à 7, dans lequel, sur le serveur (1, 2) sont installés des programmes permettant de commander au moins une imprimante et / ou un appareil de pré-traitement ou de post-traitement, et ces programmes peuvent être appelés depuis l'interpréteur (18).

9. Interpréteur destiné à un réseau selon l'une quelconque des revendications précédentes, qui peut être installé sur un serveur (1, 2) du réseau pour connecter des unités centrales de traitement, et qui est configuré pour interpréter et exécuter des éléments de langage exécutables sur le serveur (1, 2), lesquels éléments de langage sont contenus dans les fichiers enregistrés sur le serveur (1, 2), moyennant quoi ces fichiers peuvent être appelés depuis un client (3, 4) en transmettant une adresse, et contiennent des éléments de langage supplémentaires exécutables sur le client (3, 4).

10. Interpréteur selon la revendication 9, qui présente une instruction permettant de générer des enregistrements en chaîne dans le fichier.

11. Interpréteur selon l'une quelconque des revendications 9 ou 10, comportant une instruction permettant de placer des enregistrements en chaîne à un emplacement prédéterminé du fichier.

12. Interpréteur selon l'une quelconque des revendications 9 à 11, comportant une instruction permettant de lire une chaîne de caractères transmise du client (3, 4) au serveur (1, 2), et d'enregistrer la chaîne de caractères dans une variable prédéterminée.

13. Interpréteur selon l'une quelconque des revendications 9 à 12, comportant une instruction permettant d'appeler une passerelle et d'interroger un système relié à la passerelle.

14. Interpréteur selon l'une quelconque des revendications 9 à 13, qui comprend un groupe d'instructions client, qui peuvent être appelées aussi bien depuis le client que depuis le serveur, et un groupe d'instructions serveur, qui ne peuvent être appelées que depuis le serveur.

15. Support de données, sur lequel est enregistré un interpréteur selon l'une quelconque des revendications 9 à 14.

16. Procédé d'exploitation d'un réseau permettant d'établir la connexion avec des unités centrales de traitement, qui comprend au moins un serveur (1, 2) et au moins un client (3, 4), moyennant quoi les fichiers enregistrés sur le serveur (1, 2), exécutables aussi bien sur le serveur (1, 2 ) que sur le client (3, 4), peuvent être transmis du serveur (1, 2) au client (3, 4) quand le client (3, 4) les appelle en envoyant une adresse de fichier correspondante au serveur (1, 2), et le serveur propose chaque fois un ou plusieurs services, moyennant quoi, si le client demande un service déterminé avec des paramètres caractérisant le service, le serveur interrogé détermine s'il peut offrir le service, et si le serveur constate qu'il ne peut pas offrir le service, il indique au client un autre serveur ou un appareil connecté au réseau, qui peut exécuter le service,
**caractérisé en ce que** l'interpréteur existant au moins sur l'un des serveurs (1, 2) interprète et exécute les éléments de langage exécutables sur le serveur (1, 2), moyennant quoi les éléments de langage sont obtenus dans les fichiers enregistrés sur le serveur (1, 2), et moyennant quoi ces fichiers sont appelés par le client (3, 4) en transmettant une adresse, et contiennent des éléments de langage supplémentaires exécutables sur le client (3, 4).

17. Procédé d'exploitation d'un réseau selon la revendication 16, dans lequel l'un des services offerts par les serveurs est l'exécution d'une tâche d'impression, et le serveur transfère la tâche d'impression à un autre serveur ou directement à une imprimante, quand le serveur ne peut pas exécuter lui-même la tâche d'impression.

18. Procédé d'exploitation d'un réseau selon l'une quelconque des revendications 16 ou 17, dans lequel le serveur présente une base de données dans laquelle sont enregistrées des informations concernant les services offerts sur le réseau, et dans lequel, quand le client fait une demande à l'aide de cette base de données, on lui indique si le service souhaité existe sur le réseau.

19. Procédé d'exploitation d'un réseau selon l'une quelconque des revendications 16 à 18, dans lequel la communication avec un autre serveur ou un appareil connecté au réseau est établie en générant l'adresse de l'autre serveur ou de l'appareil ou en transmettant l'adresse au client demandeur.

20. Procédé d'exploitation d'un réseau selon l'une quelconque des revendications 16 à 19, dans lequel on utilise un interpréteur selon l'une quelconque des revendications 10 à 15.
